Europäisches Patentamt

European Patent Office

Office européen des brevets

(19)

(11) Numéro de publication: **0 309 708 B1**

(12) **FASCICULE DE BREVET EUROPEEN**

(45) Date de publication de fascicule du brevet: **09.12.92**  (51) Int. Cl.5: **A47J 31/06**

(21) Numéro de dépôt: **88113187.4**

(22) Date de dépôt: **13.08.88**

(54) **Filtre utilisable dans une cartouche pour la confection d'une boisson.**

(30) Priorité: **01.10.87 CH 3815/87**

(43) Date de publication de la demande:
**05.04.89 Bulletin 89/14**

(45) Mention de la délivrance du brevet:
**09.12.92 Bulletin 92/50**

(84) Etats contractants désignés:
**AT BE CH DE ES FR GB IT LI LU NL SE**

(56) Documents cités:
**CH-A- 337 635**
**DE-C- 121 286**
**US-A- 1 433 357**
**US-A- 2 047 134**

(73) Titulaire: **SOCIETE DES PRODUITS NESTLE S.A.**
**Case postale 353**
**CH-1800 Vevey(CH)**

(72) Inventeur: **Favre, Eric**
**La Cadette**
**CH-1041 Saint-Barthelemy(CH)**
Inventeur: **Masek, Petr.**
**Rue d'Entremonts 24**
**CH-1400 Yverdon(CH)**
Inventeur: **Truchement, Bernard**
**Route de Sichoz 4**
**CH-1814 La Tour-de-Peilz(CH)**

Rank Xerox (UK) Business Services

EP 0 309 708 B1

# Description

L'invention concerne un filtre pour une cartouche à café, ainsi que la cartouche obtenue avec ledit filtre. Un filtre et une cartouche du genre indiqué dans le préambule des revendications 1 et 10 sont exposée dans CH - A - 337 635.

Le brevet CH 605293 concerne une cartouche pour la confection d'une boisson, notamment de café espresso, se composant d'un corps étanche ayant la forme générale d'un tronc de cône avec une bordure à la base, une membrane fermant ladite base et un filtre voisin de ladite membrane.

Le filtre utilisé est un tamis en polypropylène ayant des ouvertures de mailles comprises entre 0,04 et 0,06 mm. Ce filtre présente une série d'inconvénients qui ne le rendent pas très attractif. Il a une soudabilité qui n'est pas bonne. Il a une mauvaise résistance mécanique lors de l'extraction de la cartouche, étant déformé ou les bords étant arrachés sous l'effet d'une pression pouvant aller jusqu'à 15 bars. Il pose des problèmes de sertissage lors de la fabrication de la cartouche: les bords ne sont pas complètement étanches, posant ainsi des problèmes de conservation du café, du fait de l'entrée d'oxygène dans la cartouche. Finalement, la qualité du café obtenu n'est pas satisfaisante: le taux d'extraction du café n'est pas optimisé ainsi que la qualité de la mousse typique du café espresso.

Le but de la présente invention est de mettre à disposition de l'amateur de boisson, notamment de café espresso, un filtre, utilisable dans une cartouche, ne possédant pas les inconvénients précités. L'invention concerne un filtre défini dans la revendication 1.

Dans la forme de réalisation des ouvertures tronc coniques, le diamètre de la petite base est compris entre 0,1 et 0,3 mm et celui de la grande base entre 0,2 et 0,5 mm.

Dans la forme de réalisation des ouvertures tronc pyramidales, la diagonale du carré de la petite base est comprise entre 0,1 et 0,3 mm et celle du carré de la grande base entre 0,2 et 0,5 mm.

Si les ouvertures ont la forme de tronc de tétraèdre équilatéral, les côtés du triangle de la petite base sont compris entre 0,1 et 0,3 mm et ceux du triangle de la grande base entre 0,2 et 0,5 mm.Par boisson, on entend celle obtenue à partir de café moulu torréfié. En général, il s'agit plutôt de café espresso.

Dans le filtre selon l'invention, chaque ouverture présente du côté de la petite base un mamelon dont la hauteur est sensiblement égale à l'épaisseur du filtre. Ce filtre a normalement une épaisseur comprise entre 0,2 et 0,6 mm, de préférence entre 0,3 et 0,4 mm.

Le matériau utilisable pour le filtre est de type métallique de préférence de l'aluminium recouvert d'une laque thermosoudable, du nickel ou une matière plastique compatible dans le domaine alimentaire, supportant une température de 100°C et une pression de 15 bars.

Le filtre selon l'invention a, de préférence, une forme circulaire et un diamètre compris entre 20 et 50 mm, de préférence d'environ 30 mm. Il comporte entre 70 et 200 ouvertures, de préférence entre 80 et 90. Dans la forme de réalisation plus spécifique de tronc de cône, chaque ouverture a une petite base de diamètre de 0,2 mm et une grande base de diamètre de 0,3 mm ou 0,45 mm.

L'invention concerne également la cartouche définie dans la revendication 10 et comportant le filtre décrit ci-dessus. Par cartouche, on entend aussi bien celle faisant l'objet du brevet CH 605293 qu'un autre type de cartouche devant comporter un filtre. Le filtre est disposé dans la cartouche de manière à ce que la face avec les mamelons soit en regard de la substance à extraire. S'agissant d'une cartouche avec du café moulu, la conicité des ouvertures permet de donner une mousse plus durable sur le café espresso obtenu. La présence des mamelons du côté café est souhaitée, car elle permet ainsi d'éviter que le filtre ne se bouche par les grains de café moulu ou par les fines.

La suite de la description est faite en référence aux dessins sur lesquels :

Fig 1     est une vue en plan du filtre selon l'invention

Fig 2     est une coupe sur une ouverture grossie 100 fois.

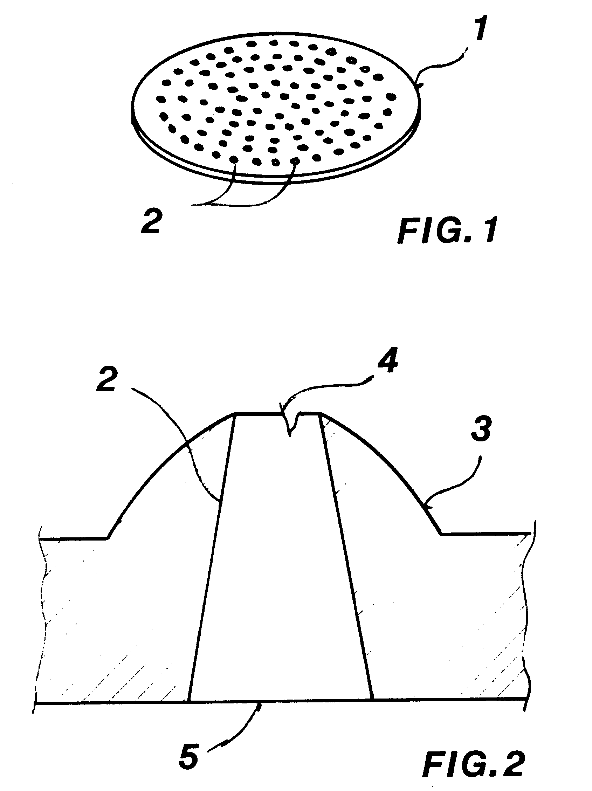

Le filtre (1) est en aluminium et comporte dans la forme de réalisation de la Fig 1. 87 ouvertures (2). Ces ouvertures (2) sont représentées plus en détail sur la Fig 2. Sur cette Figure, la petite base (4) a un diamètre de 0,2 mm et la grande base (5) un diamètre de 0,3 mm. Le mamelon (3) a une hauteur de 0,3mm. L'épaisseur du filtre est de 0,4 mm.

Le filtre, objet de la présente invention, permet de mettre à disposition du consommateur une cartouche à café avec laquelle on peut préparer une boisson réunissant au maximum les propriétés d'un bon café espresso, à savoir, bonne onctuosité de la mousse, rémanence du goût de café, bonne extractabilité du café.

# Revendications

1. Filtre pour cartouche à café, comportant des ouvertures de même grandeur uniformément réparties, caractérisé en ce que ces ouvertures ont chacune la forme de tronc de cône, de tronc de pyramide ou de tronc de tétraèdre et en ce que chaque ouverture présente du côté de la petite base un mamelon dont la hauteur est sensiblement égale à l'épaisseur du filtre.

2. Filtre selon la revendication 1, caractérisé en ce que les ouvertures ont la forme de tronc de cône, le diamètre de la petite base étant compris entre 0,1 et 0,3 mm et celui de la grande base entre 0,2 et 0,5 mm.

3. Filtre selon la revendication 1, caractérisé en ce que les ouvertures ont la forme de tronc de pyramide, la diagonale du carré de la petite base étant comprise entre 0,1 et 0,3 mm et celle du carré de la grande base entre 0,2 et 0,5 mm.

4. Filtre selon la revendication 1, caractérisé en ce que les ouvertures ont la forme de tronc de tétraèdre équilatéral, les côtés du triangle de la petite base étant compris entre 0,1 et 0,3 mm et ceux du triangle de la grande base entre 0,2 et 0,5 mm.

5. Filtre selon la revendication 1, caractérisé en ce qu'il a une forme circulaire et un diamètre compris entre 20 et 50 mm.

6. Filtre selon l'une des revendications 1 à 5, caractérisé en ce qu'il comporte entre 70 et 200 ouvertures, de préférence entre 80 et 90.

7. Filtre selon l'une des revendications 1 à 6, caractérisé en ce qu'il a une épaisseur comprise entre 0,2 et 0,6 mm.

8. Filtre selon la revendication 2, caractérisé en ce que la petite base a un diamètre de 0,2 mm et la grande base un diamètre de 0,3 mm.

9. Filtre selon l'une des revendications 1 à 8, caractérisé en ce qu'il est en une matière choisie parmi l'aluminium, le nickel et une matière plastique compatible dans le domaine alimentaire.

10. Cartouche pour la confection d'une boisson, caractérisée en ce qu'elle comprend un filtre selon l'une des revendications 1 à 9, dans lequel la face avec les mamelons est en regard de la substance à extraire.

## Claims

1. A filter for a coffee cartridge comprising uniformly distributed openings of the same size, characterized in that each of these openings is in the shape of a truncated cone, truncated pyramid or truncated tetrahedron and in that, on the side of the minor base, each opening comprises a nipple substantially equal in height to the thickness of the filter.

2. A filter as claimed in claim 1, characterized in that the openings are frustoconical in shape, the diameter of the minor base being between 0.1 and 0.3 mm and that of the major base between 0.2 and 0.5 mm.

3. A filter as claimed in claim 1, characterized in that the openings are frustopyramidal in shape, the diagonal of the square of the minor base being between 0.1 and 0.3 mm and that of the square of the major base between 0.2 and 0.5 mm.

4. A filter as claimed in claim 1, characterized in that the openings are in the form of an equilateral truncated tetrahedron, the sides of the triangle of the minor base being between 0.1 and 0.3 mm and those of the triangle of the major base between 0.2 and 0.5 mm.

5. A filter as claimed in claim 1, characterized in that it is circular in shape with a diameter of 20 to 50 mm.

6. A filter as claimed in any of claims 1 to 5, characterized in that it comprises between 70 and 200 openings and preferably between 80 and 90.

7. A filter as claimed in any of claims 1 to 6, characterized in that it has a thickness of 0.2 to 0.6 mm.

8. A filter as claimed in claim 2, characterized in that the minor base has a diameter of 0.2 mm and the major base a diameter of 0.3 mm.

9. A filter as claimed in any of claims 1 to 8, characterized in that it is made of a material selected from aluminium nickel and a plastics material compatible with foods.

10. A cartridge for the preparation of a beverage, characterized in that it comprises a filter of the type claimed in any of claims 1 to 9, in which the surface with the nipples faces the substance to be extracted.

## Patentansprüche

1. Filter für Kaffeepatronen mit gleichmäßig verteilten Öffnungen gleicher Größe, dadurch gekennzeichnet, daß diese Öffnungen je die Form eines Kegelstumpfes, eines Pyramidenstumpfes oder eines Tetraederstumpfes haben und daß jede Öffnung auf der Seite ihrer kleinen Basis einen warzenförmigen Vorsprung aufweist, dessen Höhe im wesentlichen gleich der Dicke des Filters ist.

2. Filter nach Anspruch 1, dadurch gekennzeichnet, daß die Öffnungen die Form eines Kegelstumpfes haben, wobei der Durchmesser der kleinen Basis zwischen 0,1 und 0,3 mm und jener der großen Basis zwischen 0,2 und 0,5 mm beträgt.

3. Filter nach Anspruch 1, dadurch gekennzeichnet, daß die Öffnungen die Form eines Pyramidenstumpfes haben, wobei die Diagonale des Quadrats der kleinen Basis zwischen 0,1 und 0,3 mm und jene des Quadrats der großen Basis zwischen 0,2 und 0,5 mm lang ist.

4. Filter nach Anspruch 1, dadurch gekennzeichnet, daß die Öffnungen die Form des Stumpfes eines gleichseitigen Tetraeders haben, wobei die Dreieckseite der kleinen Basis zwischen 0,1 und 0,3 mm und jene der großen Basis zwischen 0,2 und 0,5 mm lang ist.

5. Filter nach Anspruch 1, dadurch gekennzeichnet, daß er Kreisform und einen Durchmesser zwischen 20 und 50 mm aufweist.

6. Filter nach einem der Ansprüche 1 bis 5, dadurch gekennzeichnet, daß er zwischen 70 und 200 Öffnungen hat, vorzugsweise zwischen 80 und 90.

7. Filter nach einem der Ansprüche 1 bis 6, dadurch gekennzeichnet, daß er eine Dicke zwischen 0,2 und 0,6 mm hat.

8. Filter nach Anspruch 2, dadurch gekennzeichnet, daß die kleine Basis einen Durchmesser von 0,2 mm und die große Basis einen Durchmesser von 0,3 mm hat.

9. Filter nach einem der Ansprüche 1 bis 8, dadurch gekennzeichnet, daß er aus einem Material besteht, das aus Aluminium, Nickel und einem mit dem Nahrungsmittelbereich kompatiblen Kunststoffmaterial gewählt ist.

10. Patrone für die Herstellung eines Getränkes, dadurch gekennzeichnet, daß sie einen Filter nach einem der Ansprüche 1 bis 9 aufweist, dessen Seite mit den warzenförmigen Vorsprüngen der zu extrahierenden Substanz zugekehrt ist.

FIG. 1

FIG.2